# EUROPEAN PATENT SPECIFICATION

(11) **EP 4 446 800 B1**
(45) Date of publication and mention of the grant of the patent: **14.10.2026**
(21) Application number: 22904387.2
(22) Date of filing: 17.08.2022
(51) Int. Cl.: G02F 1/03

(54) **ACTIVE RADIATION CONTROL WINDOW**
AKTIVES STRAHLUNGSSTEUERUNGSFENSTER
FENÊTRE DE COMMANDE DE RAYONNEMENT ACTIF

(30) Priority: 10.12.2021 KR 20210176479
(43) Date of publication of application: 16.10.2024
(73) Proprietor: Center for Advanced Meta-Materials, Daejeon 34103 (KR)
(72) Inventor: LIM, Mikyung, Daejeon 34127 (KR); KIM, Jae-Hyun, Daejeon 34140 (KR); KIM, Hyeon-Don, Daejeon 34825 (KR); KIM, Kwangseop, Daejeon 34140 (KR); LEE, Hak Joo, Daejeon 35201 (KR)
(74) Representative: Lewis Silkin LLP
(86) International application number: PCT/KR2022/012293
(87) International publication number: WO 2023/106550

(56) References cited:
- KR-A- 20140 103 461
- KR-A- 20150 061 620
- KR-A- 20150 061 620
- KR-A- 20160 100 066
- US-A1- 2013 128 336
- US-A1- 2014 175 281
- US-A1- 2015 168 747

## Description

### BACKGROUND

### 1. Field of Disclosure

The present disclosure of invention relates to an active radiation control window, and more specifically the present disclosure of invention relates to an active radiation control window capable of maintaining total transmissivity of a visible light and controlling total reflectivity of a near-infrared light.

### 2. Description of Related Technology

Recently, the development and commercialization of electric vehicles has become active, and electric vehicle manufacturers are investing heavily to increase the driving range of the electric vehicles.

The vehicles are generally equipped with windows manufactured using transparent materials such as a glass. Since the internal temperature of the vehicle increases due to the influx of a near-infrared light through the windows in the summer, a lot of power should be used to operate the air conditioning system and thus battery consumption is high. In addition, a lot of power is used to heat the vehicle and the battery consumption is high in the winter. The above power consumption required for cooling and heating makes it difficult to extend the driving range of the electric vehicles.

Smart windows are attracting attention because they can improve energy efficiency by freely controlling the amount of light transmitted. As the types of the smart windows, there are a chromic display (CD) in which a reversible color change is induced according to changes in an external voltage (EC, Electrochromic), a light wavelength (PC, Photochromic) or a temperature (TC, Thermochromic), a suspended particle device (SPD), a polymer dispersed liquid crystal (PDLC) and so on.

However, transmissivity of a visible light is controlled in the SPD, the PDLC and the CD according to the EC, and there is a limitation that it is not suitable for application to the vehicle window. In addition, when applied to the window, there is a limitation that the transmissivity and absorptivity of the light is controlled and thus the total amount of the energy incident into the system is similar. Further, the CD according to the TC has the problem of requiring a high activation temperature.

These problems may equally occur when the smart window are applied not only to the vehicles but also to buildings.

Related prior arts are Korean laid-open patent No. 2016-0117326 published on October 10, 2016. KR 2015 0061620 A1 relates to a complex optical film with a near-infrared shielding function. US 2015/168747 A1 relates to an optical modulator including a first electrode, a second electrode and a dielectric layer provided between the first and second electrodes.

### SUMMARY

The present invention is developed to solve the above-mentioned problems of the related arts. The present invention provides an active radiation control window capable of maintaining total transmissivity of a visible light and controlling total reflectivity of a near-infrared light

According to an example embodiment, an active radiation control window includes a control layer, a filter layer and a resonance layer. The control layer is configured to control transmissivity or absorptivity of an near-infrared light according to an applied voltage. The filter layer is disposed under the control layer, and is configured to transmit a visible light and to reflect the near-infrared light. The resonance layer is disposed between the control layer and the filter layer, and has a dielectric material. Total transmissivity of the visible light is maintained and total reflectivity of the near-infrared light is controlled when the applied voltage is changed.

In an example, the control layer controls the transmissivity of the near-infrared light when a first voltage is applied to be higher than that when a second voltage different from the first voltage is applied, the absorptivity of the near-infrared light when the first voltage is applied to be lower than that when the second voltage is applied, or the transmissivity and the absorptivity of the visible light to be uniformly maintained when the first and second voltages are applied.

In an example, the control layer may include a plurality of graphene layers stacked with each other.

In an example, the filter layer may include a dielectric layer and a metal layer disposed alternately.

In an example, the dielectric layer may include a light transmissive material for the visible light and the near-infrared light.

In an example, the filter layer may include at least one dielectric layers stacked with each other.

In an example, each of the dielectric layers may include a dielectric material having a relatively high refractive index and a dielectric material having a relatively low refractive index alternately.

The resonance layer amplifies a difference between the total reflectivity of the near-infrared light when a first voltage is applied and the total reflectivity of the near-infrared light when a second voltage is applied, and a difference between the total absorptivity of the near-infrared light when the second voltage is applied and the total absorptivity of the near-infrared light when the first voltage is applied.

In an example, the resonance layer may decrease the total absorptivity of the visible light when the first and second voltages are applied.

In an example, the resonance layer may have a uniform thickness

In an example, the active radiation control window may further include a protective layer formed on the control layer with a light transmissive material.

In an example, the protective layer may include a transparent electrode, and the transparent electrode increases the total transmissivity of the visible light due to an anti-reflection effect.

In an example, the active radiation control window may further include an insulating layer disposed between the protective layer and the control layer, and configured to electrically insulate the protective layer from the control layer.

In an example, the active radiation control window may further include an electrode layer disposed over the resonance layer and disposed at a side of the control layer, and configured to provide a power to apply an electric field to the resonance layer.

In an example, the active radiation control window may further include an adhesive layer disposed on the control layer and having an adhesion.

In an example, the active radiation control window may further include an adhesive layer disposed under a substrate on which the filter layer is formed, and having an adhesion.

According to the present example embodiments, when the applied voltage is changed, the total transmissivity of the visible light may be maintained and the total reflectivity of the near-infrared light may be controlled. Thus, in the summer, the absorptivity of the near-infrared light of the control layer is decreased by applying a high voltage to the control layer, and the transmitted near-infrared light is reflected on the filter layer by increasing the transmissivity of the control layer at the same time. Then, it is possible to achieve a high reflection effect preventing the near-infrared light from entering the inside. In addition, in the winter, the absorptivity of the near-infrared light of the control layer is increased and this is amplified in the resonance layer by applying a low voltage to the control layer. Then, the absorbed near-infrared light may be more introduced into the inside in the form of heat. Using this, battery consumption for cooling the vehicle in the summer or for heating the vehicle in the winter may be decreased, and thus the vehicle's mileage may be extended.

### BRIEF DESCRIPTION OF THE DRAWINGS

FIG. 1 is a cross-sectional view illustrating an active radiation control window according to a first example embodiment of the present invention;
FIG. 2A to FIG. 2C are graphs showing performance according to a control layer of the active radiation control window of FIG. 1;
FIG. 3 is a cross-sectional view illustrating an example filter layer of the active radiation control window of FIG. 1;
FIG. 4A and FIG. 4B are graphs showing performance according to a filter layer of the active radiation control window of FIG. 3;
FIG. 5 is a cross-sectional view illustrating another example filter layer of the active radiation control window of FIG. 1;
FIG. 6A and FIG. 6B are graphs showing performance according to a filter layer of the active radiation control window of FIG. 5;
FIG. 7A to FIG. 7C are graphs showing performance when a resonance layer is omitted in the active radiation control window of FIG. 1;
FIG. 8A to FIG. 8C are graphs showing performance according to the resonance layer of the active radiation control window of FIG. 1;
FIG. 9 is a cross-sectional view illustrating an active radiation control window according to a second example embodiment of the present invention;
FIG. 10 is a cross-sectional view illustrating another example of the active radiation control window of FIG. 9;
FIG. 11A and FIG. 11B are plan views illustrating the active radiation control window of FIG. 10;
FIG. 12 is a cross-sectional view illustrating still another example of the active radiation control window of FIG. 9;
FIG. 13A and FIG. 13B are plan views illustrating the active radiation control window of FIG. 12;
FIG. 14 is a cross-sectional view illustrating an active radiation control window according to a third example embodiment of the present invention; and
FIG. 15A and FIG. 15B are cross-sectional views illustrating an active radiation control window according to a fourth example embodiment of the present invention.

### * Reference numerals

| | | | |
|---|---|---|---|
| 1, 2, 3, 4, 5, 6, 7 : | active radiation control window | | |
| 100 : | control layer | 110 : | graphene layer |
| 200 : | filter layer | 210 : | dielectric layer |
| 220 : | metal layer | 300 : | resonance layer |
| 400 : | substrate | 500 : | protective layer |
| 500a, 500b : | electrode layer | 600 : | insulating layer |
| 700 : | adhesive layer | | |

### DETAILED DESCRIPTION

The invention is described more fully hereinafter with Reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. In the drawings, the size and relative sizes of layers and regions may be exaggerated for clarity.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention. Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the term "below" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, the invention is described more fully hereinafter with reference to the accompanying drawings, in which embodiments of the invention are shown.

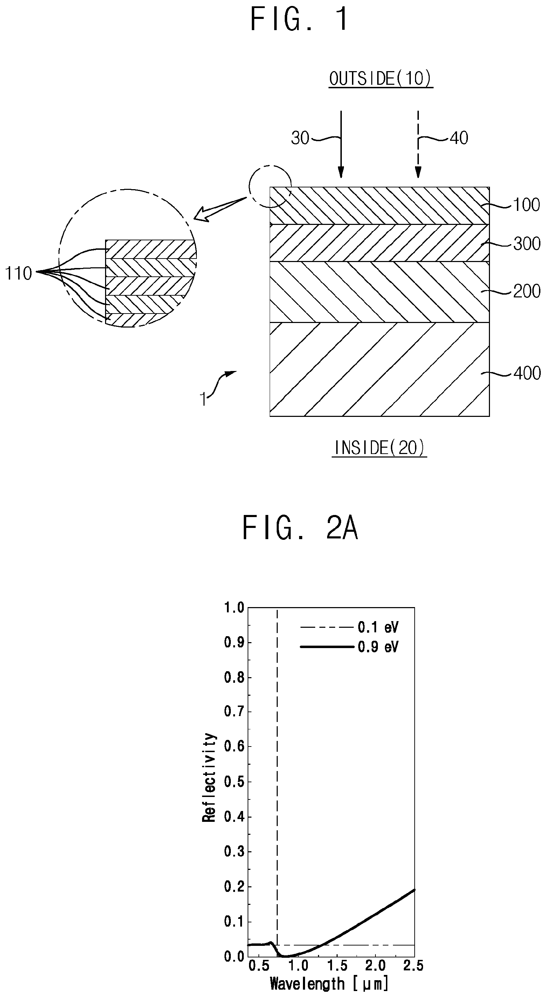

FIG. 1 is a cross-sectional view illustrating an active radiation control window according to a first example embodiment of the present invention.

Referring to FIG. 1, the active radiation control window 1 includes a control layer 100, a filter layer 200 and a resonance layer 300.

The filter layer 200 is disposed on a substrate 400, a resonance layer 300 is disposed on the filter layer 200, and the control layer 100 is disposed on the resonance layer 300.

When the active radiation control window 1 is used for a window of a vehicle, the substrate 400 may be a glass of the vehicle. When the active radiation control window 1 is used for a window of a building, the substrate 400 may be a window glass of the building. However, the substrate 400 is not limited to the glass and may be other element of the vehicle or the building.

For example, the substrate 400 may be a film attached to the window of the vehicle or the building, and may include polyethylene terephthalate (PET), polyethylene (PE) and so on.

Alternatively, the substrate 400 may form a base supporting layers formed on the substrate 400, and the active radiation control window 1 having the substrate 400 may be attached to an additional structure such as the glass of the vehicle or the window of the building.

The control layer 100 is disposed at an outermost side of the active radiation control window 1 and is exposed to an outside 10. Thus, a visible light 30 and a near-infrared light 40 are first incident into the control layer 100.

The control layer 100 may include a material with electrically adjustable optical properties. For example, the control layer 100 may include a plurality of graphene layers 110, and the graphene layers are stacked with each other.

The control layer 100 may control transmissivity or absorptivity of the near-infrared light 40 according to an applied voltage.

FIG. 2A to FIG. 2C are graphs showing performance according to a control layer of the active radiation control window of FIG. 1.

Referring to FIG. 2A, when a first voltage of 0.9eV is applied to the control layer 100, the reflectivity of the visible light (350 nm to 700 nm) is relatively low but the reflectivity of the near-infrared light (700 nm to 2.5 µm) is increased.

However, when a second voltage of 0.1eV is applied to the control layer 100, the reflectivity of the visible light and the near-infrared light is relatively low and the reflectivity is uniformly maintained.

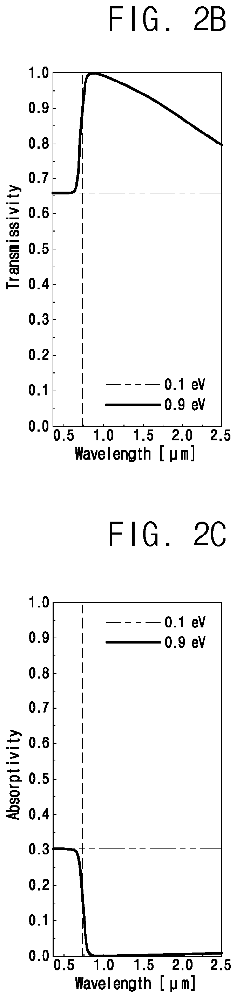

In addition, referring to FIG. 2B, when the second voltage of 0.1eV is applied to the control layer 100, the transmissivity of the visible light and the near-infrared light is uniform. However, when the first voltage of 0.9eV is applied to the control layer 100, the transmissivity of the infrared-light is rapidly increased. Here, when the voltage between the first and second voltages is properly applied, the transmissivity of the near-infrared light may be controlled by about 30%.

In addition, referring to FIG. 2C, when the second voltage of 0.1eV is applied to the control layer 100, the absorptivity of the visible light and the near-infrared light is uniform. However, when the first voltage of 0.9eV is applied to the control layer 100, the absorptivity of the near-infrared light is rapidly decreased. Here, when the voltage between the first and second voltages is properly applied, the absorptivity of the near-infrared light may be controlled by about 30%.

The control layer 100 controls the transmissivity of the near-infrared light when the first voltage is applied higher than that of the near-infrared light when the second voltage is applied, or controls the absorptivity of the near-infrared light when the first voltage is applied lower than that of the near-infrared light when the second voltage is applied. In addition, the control layer 100 controls the transmissivity and the absorptivity of the visible light when the first and second voltages are applied to be uniform.

Accordingly, when Fermi level of the control layer 100 is controlled to be between 0.1eV and 0.9eV, the characteristics of the visible light are maintained and the characteristics of the near-infrared light are changed greatly. Here, when the applied voltage is changed, total transmissivity of the visible light is maintained and the total reflectivity of the near-infrared light is controlled.

Thus, in the summer, the relatively high voltage is applied to the control layer and then the absorptivity of the near-infrared light is decreased, and at the same time, the transmissivity of the control layer is increased and the transmissive near-infrared light is reflected on the filter layer 200. Thus, the relatively high reflective effect may be performed such that the near-infrared light is not flowed into an inside 20.

In addition, in the winter, the relatively lower voltage is applied to the control layer and then the transmissivity of the near-infrared light of the control layer is decreased and the absorptivity of the near-infrared light of the control layer is increased. Thus, the near-infrared light is amplified by the resonance layer 300, and then the absorbed near-infrared light is flowed into the inside 20 more effectively with a thermal state. Using this, the battery consumption for the cooling of the vehicle in the summer or the heating of the vehicle in the winter may be decreased, and thus the mileage of the vehicle may be increased.

The filter layer 200 is disposed under the control layer 100, and the visible light is transmitted and the near-infrared light is reflected.

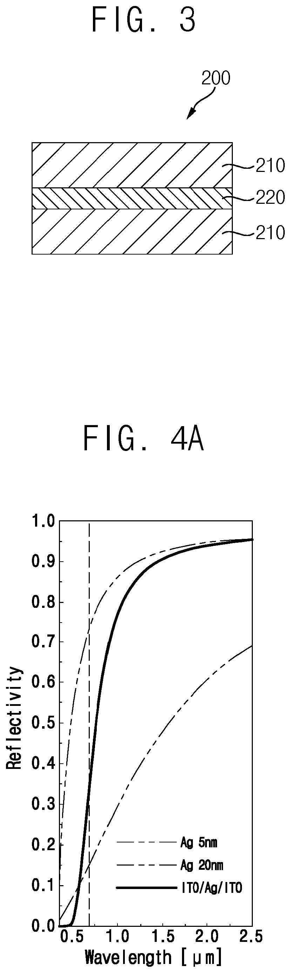

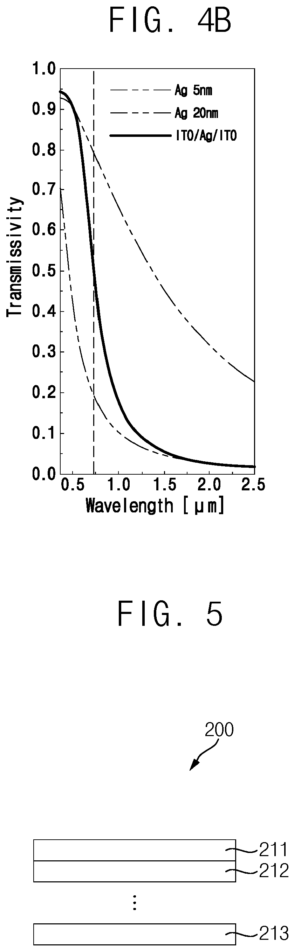

FIG. 3 is a cross-sectional view illustrating an example filter layer of the active radiation control window of FIG. 1. FIG. 4A and FIG. 4B are graphs showing performance according to a filter layer of the active radiation control window of FIG. 3.

Referring to FIG. 3, the filter layer 200 may have a dielectric layer 210 and a metal layer 220, and the dielectric layer 210 and the metal layer 220 may be alternately disposed.

The filter layer 200 has a plurality of the dielectric layers 210 and a plurality of the metal layers 220. Here, the dielectric layers 210 and the metal layers 220 may be repeatedly stacked like 'the dielectric layer 210/the metal layer 220', or may be repeatedly stacked like 'the dielectric layer 210/the metal layer 220/the dielectric layer' in which the dielectric layer 210 is disposed at an uppermost side of the filter layer 200 and is disposed at a lowermost side of the filter layer 200. However, the disposition of the dielectric layer 210 and the metal layer 220 may not be limited thereto.

The dielectric layer 210 may include a light transmissive material for the visible light and the near-infrared light, and for example may be indium tin oxide (ITO). The metal layer 220 may have silver (Ag).

As illustrated in FIG. 4A, when the filter layer 200 has the silver (Ag) with the thickness of 5nm, the reflectivity of the visible light is relatively low but the reflectivity of the near-infrared light is also low within 0.7. In addition, when the filter layer 200 has the silver (Ag) with the thickness of 20nm, the reflectivity of the near-infrared light is over 0.9 but the reflectivity of the visible light is also relatively high.

However, as in the present example embodiment, when the dielectric layer 210 having the ITO and the metal layer 220 having the silver of 20nm thickness are alternately formed in the filter layer 200, the reflectivity of the visible light is relatively low but the reflectivity of the near-infrared light is rapidly increased. In the present example embodiment, the filter layer shows the visible light reflectivity similar to a filter layer having the silver of 5nm thickness, and shows the near-infrared light reflectivity similar to a filter layer having the silver of 20nm thickness.

In addition, referring to FIG. 4B, when the filter layer is formed by the silver of 5nm thickness, the transmissivity of the visible light is relatively high but the transmissivity of the near-infrared light is also more than 0.2. In addition, when the filter layer is formed by the silver of 20nm thickness, the transmissivity of the near-infrared light is relatively low but the transmissivity of the visible light is also less than 0.7.

However, as in the present example embodiment, when the dielectric layer 210 having the ITO and the metal layer 220 having the silver of 20nm thickness are alternately disposed in the filter layer 200, the transmissivity of the visible light is relatively high and the transmissivity of the near-infrared light is rapidly decreased. Here, in the present example embodiment, the filter layer shows the visible light transmissivity similar to a filter layer having the silver of 5nm thickness, and shows the near-infrared light transmissivity similar to a filter layer having the silver of 20nm thickness.

When the dielectric layer 210 and the metal layer 220 are alternately disposed in the filter layer 200, the slope at the boundary wavelength between the visible light and the near-infrared light may be further increased. Here, since the boundary between the visible light and the near-infrared light is dramatically changed, the transmissivity of the visible light and the reflectivity of the near-infrared light may be effectively increased.

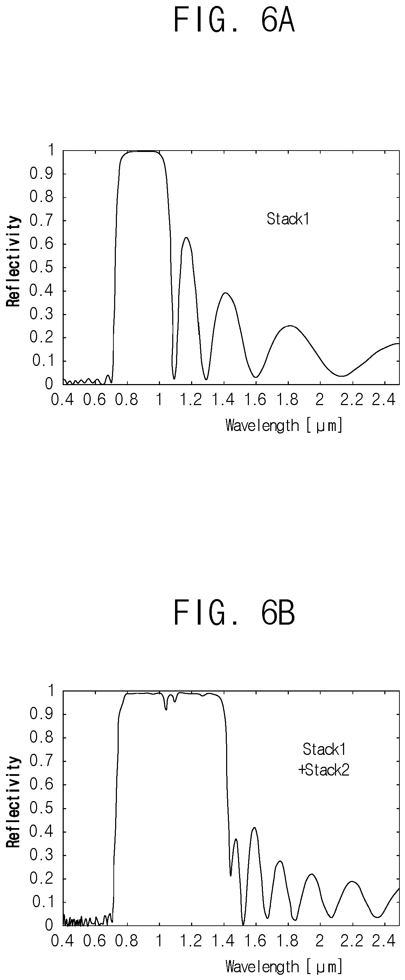

FIG. 5 is a cross-sectional view illustrating another example filter layer of the active radiation control window of FIG. 1. FIG. 6A and FIG. 6B are graphs showing performance according to a filter layer of the active radiation control window of FIG. 5.

Referring to FIG. 5, a plurality of dielectric layers 211, 212 and 213 is stacked to form the filter layer 200.

Here, at least one layer (for example, the layer 211) of the dielectric layers 211, 212 and 213 may have a structure in which a dielectric material having a relatively high refractive index and a dielectric material having a relatively low refractive index are alternately stacked, and may be designed to have a relatively high reflectivity at a specific near-infrared light range.

Each of the dielectric material having the relatively high refractive index and the dielectric material having the relatively low refractive index forming at least one dielectric layer 211, forms a quarter-wave stack to have a thickness of 1/4 wavelength at a specific wavelength (first wavelength, for example λ=860nm) of the near-infrared light range close to the visible light range, and here, the relatively high reflectivity may be shown at the specific wavelength.

Likewise, the remaining dielectric layers (for example, the layers 212 and 213) of the dielectric layers 211, 212, 213 except for the above-mentioned at least one layer (for example, the layer 211) may be designed to have a relatively high reflectivity at a specific wavelength (second wavelength and third wavelength, for example λ>1,000nm) of the near-infrared light range. The dielectric material having three or more refractive indices is stacked at each layer and the relatively low reflectivity may be performed in the visible light range.

Here, two or more stacked dielectric layers are sufficient and the number is not limited.

Accordingly, the dielectric layers are stacked with each other to form the filter layer 200, and thus the rapid reflectivity may be performed in the infrared light range.

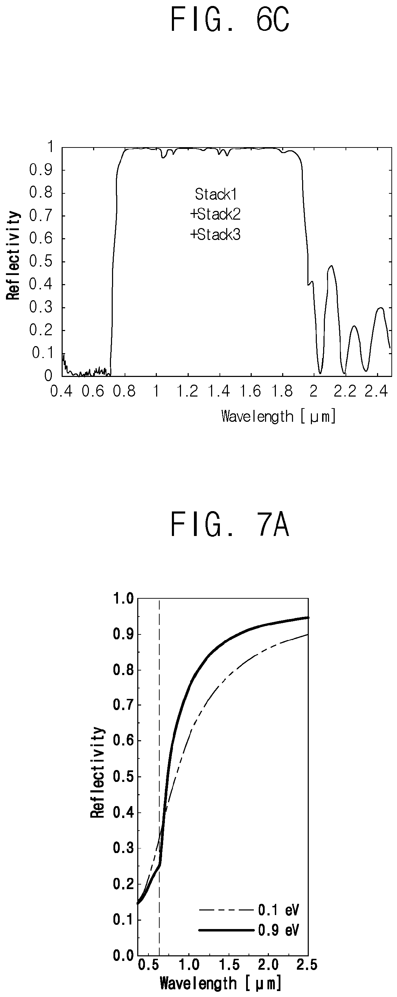

Referring to FIG. 6A to FIG. 6C, unlike in the filter layer having one dielectric layer as in FIG. 6A, in the filter layer having two dielectric layers stacked with each other as in FIG. 6B or in the filter layer having three dielectric layers stacked with each other as in FIG. 6C, the relatively high reflectivity is performed in the relatively wide range of the infrared light.

The resonance layer 300 is formed between the control layer 100 and the filter layer 200.

The resonance layer 300 has a uniform thickness, and may have a dielectric material. For example, the dielectric material for the resonance layer 300 may be silicon dioxide (SiO₂), PMMA (polymethylmethacrylate), ion gel and so on.

The resonance layer 300 amplifies a difference of total reflectivity of the near-infrared light and amplifies a difference of total transmissivity of the near-infrared light, when the voltage is changed.

FIG. 7A to FIG. 7C are graphs showing performance when a resonance layer is omitted in the active radiation control window of FIG. 1.

When the active radiation control window 1 according to the present example embodiment does not include the resonance layer, a graphene modulation effect is not sufficiently obtained between the control layer 100 and the filter layer 200.

Thus, referring to FIG. 7A, when the first voltage 0.9eV is applied, the total reflectivity of the near-infrared light is about 70%, and when the second voltage 0.1eV is applied, the total reflectivity of the near-infrared light is about 59%. The difference is about 11% and is not relatively large.

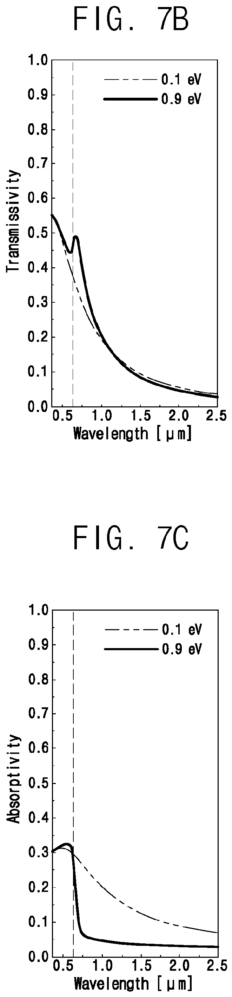

In addition, referring to FIG. 7B, the difference of the total transmissivity of the near-infrared light between when the first voltage 0.9eV is applied and when the second voltage 0.1eV is applied is relatively very low.

Further, referring to FIG. 7C, when the first voltage 0.9eV is applied, the total absorptivity of the near-infrared light is about 20%, and when the second voltage 0.1eV is applied, the total absorptivity of the near-infrared light is about 6%. The difference is about 14% and is not relatively large. Accordingly, about 4% of total solar energy may be controlled.

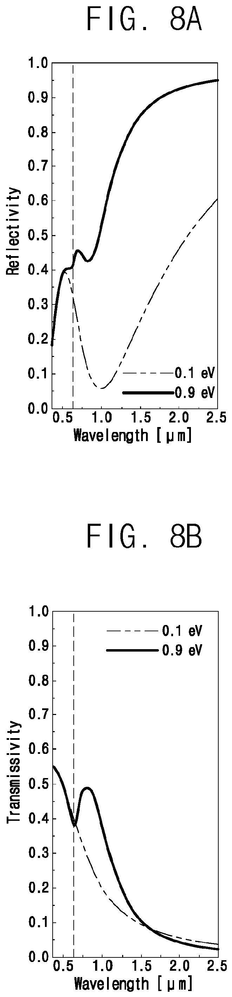

FIG. 8A to FIG. 8C are graphs showing performance according to the resonance layer of the active radiation control window of FIG. 1.

When the active radiation control window 1 according to the present example embodiment includes the resonance layer, as in FIG. 8A, when the first voltage 0.9eV is applied, the total reflectivity of the near-infrared light is about 58%, and when the second voltage 0.1eV is applied, the total reflectivity of the near-infrared light is about 17%. The difference is amplified to be about 41%.

In addition, referring to FIG. 8B, the difference of the total transmissivity of the near-infrared light between when the first voltage 0.9eV is applied and when the second voltage 0.1eV is applied is more amplified compared to the case in FIG. 7B.

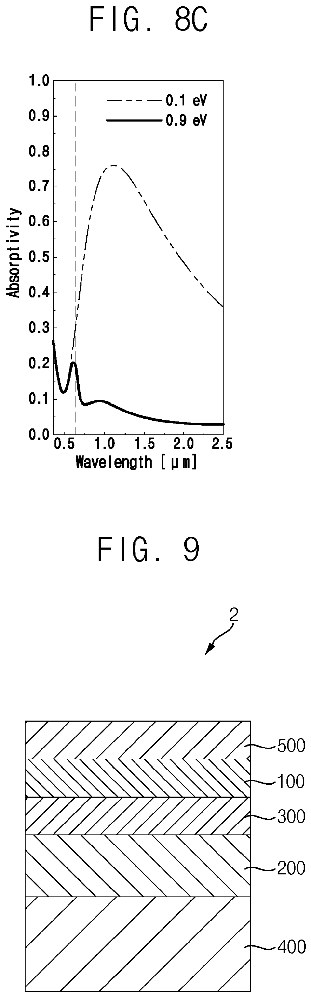

Further, referring to FIG. 8C, when the first voltage 0.9eV is applied, the total absorptivity of the near-infrared light is about 56%, and when the second voltage 0.1eV is applied, the total absorptivity of the near-infrared light is about 9%. The difference is amplified to be about 47%. Accordingly, about 22% of total solar energy may be controlled.

Thus, when the resonance layer is included, the graphene modulation effect may be sufficiently obtained between the control layer 100 and the filter layer 200.

In addition, the resonance layer 300 amplifies the difference between the total reflectivity of the near-infrared light when the first voltage is applied and the total reflectivity of the near-infrared light when the second voltage is applied, and also amplifies the difference between the total absorptivity of the near-infrared light when the first voltage is applied and the total absorptivity of the near-infrared light when the second voltage is applied.

Further, when the resonance layer 300 is included, the multiple reflection effect between the control layer 100 and the filter layer 200 is generated and then the absorptivity of the visible light is decreased. Thus, the resonance layer 300 may decrease the total absorptivity of the visible light when the first and second voltages are applied (referring to FIG. 8C). Accordingly, in the winter, the second voltage 0.1eV is applied to decrease the reflectivity of the near-infrared light dramatically and to increase the absorptivity of the near-infrared light dramatically. Thus, the battery consumption due to the heating may be decreased.

FIG. 9 is a cross-sectional view illustrating an active radiation control window according to a second example embodiment of the present invention.

The active radiation control window 2 according to the present example embodiment is substantially same as the active radiation window 1 of FIG. 1 except for a protective layer, and thus same reference numerals are used for the same elements and any repetitive explanation will be omitted.

Referring to FIG. 9, the active radiation control window 2 further includes the protective layer 500.

The protective layer 500 is formed on the control layer 100, and includes a photo-transmissive material.

The protective layer 500 covers and protects the control layer 100, the resonance layer 300 and filter layer 200 disposed under the protective layer 500, and the light provided from the outside 10 passes through the protective layer 500.

For example, the protective layer 500 may be a transparent electrode. When the voltage is applied to the filter layer 200 and the protective layer 500, an electric field is generated in the resonance layer 300 and the control layer 100 is modulated.

Thus, the protective layer 500 is the transparent electrode and the visible light is anti-reflected on the protective layer 500, and this anti-reflection may increase the total transmissivity of the visible light.

When the protective layer 500 is the transparent electrode, the transparent electrode may have the structure different from that illustrated in FIG. 9, and hereinafter, the different structure of the transparent electrode is explained.

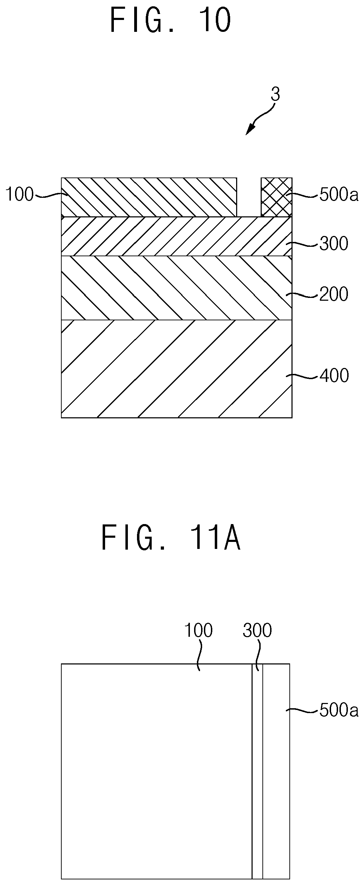

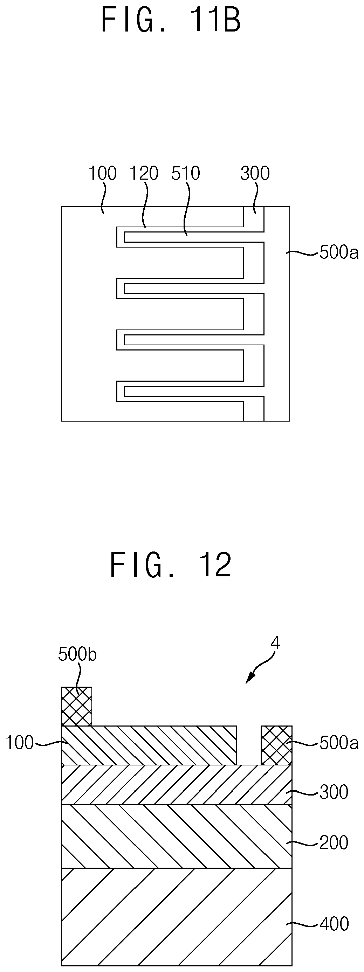

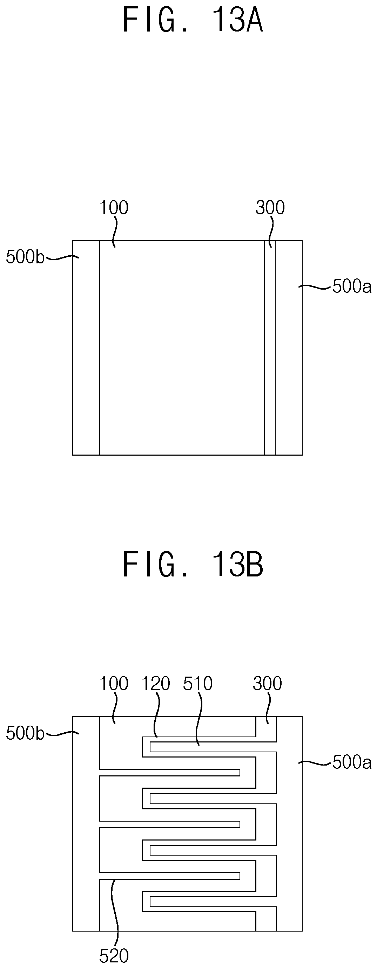

FIG. 10 is a cross-sectional view illustrating another example of the active radiation control window of FIG. 9. FIG. 11A and FIG. 11B are plan views illustrating the active radiation control window of FIG. 10. FIG. 12 is a cross-sectional view illustrating still another example of the active radiation control window of FIG. 9. FIG. 13A and FIG. 13B are plan views illustrating the active radiation control window of FIG. 12.

Referring to FIG. 10, in the active radiation control window 3, an electrode layer 500a is disposed on the resonance layer 300 and is disposed at a side of the control layer 100.

The electrode layer 500a is transparent at the visible light and the near-infrared light, and may include a graphene.

The power is applied to the electrode layer 500a and then the electric field is generated in the resonance layer 300.

In addition, referring to FIG. 11A, the electrode layer 500a is spaced apart from the control layer 100, and the electrode layer 500a may be formed along a side border at the top of the resonance layer 300.

Alternatively, referring to FIG. 11B, the control layer 100 has a groove portion 120, and the electrode layer 500a is formed to have a protrusion portion 510 protruded into the groove portions 120 adjacent to each other.

When the electrode layer 500a includes a transparent electrode having the material different from the graphene, an additional electrode layer 500b may be further formed on the control layer 100, as illustrated in the active radiation control window 4 of FIG. 12.

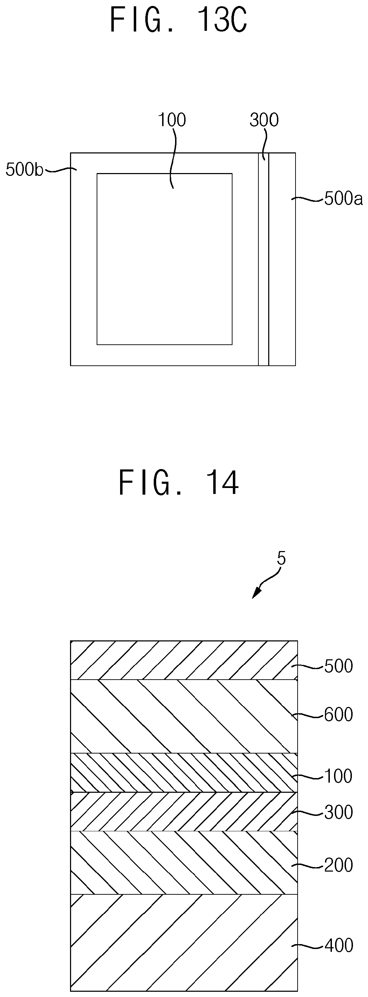

The electrode layer 500b formed on the control layer 100 may be formed along a side border at the top of the control layer 100 (referring to FIG. 13A), or may have a protruded portion 520 to cover the control layer 100 partially (referring to FIG. 13B), or may be formed along a border at the top of the control layer 100 (referring to FIG. 13C).

Here, the electrode layers 500a and 500b may include a metal, and alternatively may include a transparent electrode.

FIG. 14 is a cross-sectional view illustrating an active radiation control window according to a third example embodiment of the present invention.

The active radiation control window 5 according to the present example embodiment is substantially same as the active radiation window 2 of FIG. 9 except for an insulating layer 600.

Referring to FIG. 14, the active radiation control window 5 according to the present example embodiment further includes the insulating layer 600.

The insulating layer 600 is formed between the protective layer 500 and the control layer 100, and electrically insulates the protective layer 500 from the control layer 100. For example, the insulating layer 600 may include a dielectric material such as ion gel.

As explained above, the protective layer 500 may be the transparent electrode and the protective layer 500 functions as an opposite electrode to the insulating layer 600. Thus, when the voltage is applied to the control layer 100 and the protective layer 500, the electric field is generated at the insulating layer 600 and the control layer 100 is modulated.

In the active radiation control window 5 according to the present example embodiment, as explained referring to FIG. 10 to FIG. 13C, the control layer 100 and the electrode layer 500a are formed between the resonance layer 300 and the insulating layer 600 at the same time. Further, the electrode layer 500b may be additionally formed between the resonance layer 300 and the insulating layer 600.

As explained referring to FIG. 10 to FIG. 13C, the control layer 100 and the electrode layer 500a are formed on the resonance layer 300 and are spaced apart from each other by a predetermined distance. The insulating layer 600 is formed on the control layer 100 and the electrode layer 500a.

Further, as explained referring to FIG. 12, the electrode layer 500b may be additionally formed, and the insulating layer 600 may be formed on the control layer 100 and the electrode layers 500a and 500b.

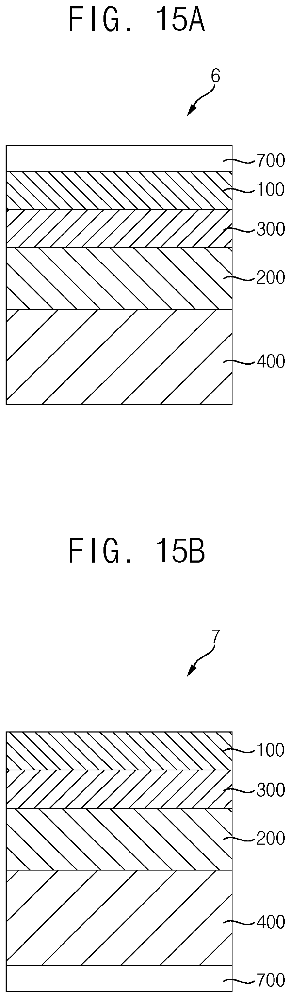

FIG. 15A and FIG. 15B are cross-sectional views illustrating an active radiation control window according to a fourth example embodiment of the present invention.

Referring to FIG. 15A, the active radiation control widow 6 according to the present example embodiment further includes an adhesive layer 700 formed on the control layer 100.

The adhesive layer 700 may include an adhesive material, and thus the active radiation control window 6 may be attached to an external structure such as the window. Here, an upper surface of the adhesive layer 700 has adhesiveness, and thus the upper surface of the adhesive layer 700 is attached to the external structure.

In FIG. 15A, the adhesive layer 700 is formed on the control layer 100 which is the uppermost layer of the active radiation control window 1 of FIG. 1. Alternatively, the adhesive layer 700 may be formed on the protective layer 500 or the electrode layers 500a and 500b which is the uppermost layer of the active radiation control windows 2, 3 and 4 of FIG. 9 to FIG. 12. Further, the adhesive layer 700 may be formed on the protective layer 500 which is the uppermost layer of the active radiation control window 5 of FIG. 14.

Alternatively, referring to FIG. 15B, the active radiation control widow 7 according to the present example embodiment further includes an adhesive layer 700 formed beneath the substrate 400.

The adhesive layer 700 may include an adhesive material, and thus the active radiation control window 7 may be attached to an external structure such as the window. Here, a lower surface of the adhesive layer 700 has adhesiveness, and thus the lower surface of the adhesive layer 700 is attached to the external structure

According to the present example embodiments, when the applied voltage is changed, the total transmissivity of the visible light may be maintained and the total reflectivity of the near-infrared light may be controlled. Thus, in the summer, the absorptivity of the near-infrared light of the control layer is decreased by applying a high voltage to the control layer, and the transmitted near-infrared light is reflected on the filter layer by increasing the transmissivity of the control layer at the same time. Then, it is possible to achieve a high reflection effect preventing the near-infrared light from entering the inside. In addition, in the winter, the absorptivity of the near-infrared light of the control layer is increased and this is amplified in the resonance layer by applying a low voltage to the control layer. Then, the absorbed near-infrared light may be more introduced into the inside in the form of heat. Using this, battery consumption for cooling the vehicle in the summer or for heating the vehicle in the winter may be decreased, and thus the vehicle's mileage may be extended.

Although the exemplary embodiments of the present invention have been described, it is understood that the present invention should not be limited to these exemplary embodiments but various changes and modifications can be made by one ordinary skilled in the art within the scope of the present invention as hereinafter claimed.

## Claims

1. An active radiation control window (1) comprising:
a control layer (100) configured to control transmissivity or absorptivity of an near-infrared light according to an applied voltage;
a filter layer (200) disposed under the control layer, and configured to transmit a visible light and to reflect the near-infrared light; and
a resonance layer (300) disposed between the control layer and the filter layer, and having a dielectric material,
wherein total transmissivity of the visible light is maintained and total reflectivity of the near-infrared light is controlled when the applied voltage is changed,
wherein the resonance layer amplifies:
a difference between the total reflectivity of the near-infrared light when a first voltage is applied and the total reflectivity of the near-infrared light when a second voltage is applied; and
a difference between the total absorptivity of the near-infrared light when the second voltage is applied and the total absorptivity of the near-infrared light when the first voltage is applied.

2. The active radiation control window of claim 1, wherein the control layer controls:
the transmissivity of the near-infrared light when a first voltage is applied to be higher than that when a second voltage different from the first voltage is applied;
the absorptivity of the near-infrared light when the first voltage is applied to be lower than that when the second voltage is applied; or
the transmissivity and the absorptivity of the visible light to be uniformly maintained when the first and second voltages are applied.

3. The active radiation control window of claim 2, wherein the control layer comprises a plurality of graphene layers stacked with each other.

4. The active radiation control window of claim 1, wherein the filter layer comprises a dielectric layer and a metal layer disposed alternately, and the dielectric layer comprises a light transmissive material for the visible light and the near-infrared light.

5. The active radiation control window of claim 1, wherein the filter layer comprises at least one dielectric layers stacked with each other.

6. The active radiation control window of claim 5, wherein each of the dielectric layers comprises a dielectric material having a relatively high refractive index and a dielectric material having a relatively low refractive index alternately.

7. The active radiation control window of claim 1, wherein the resonance layer decreases the total absorptivity of the visible light when the first and second voltages are applied.

8. The active radiation control window of claim 1, wherein the resonance layer has a uniform thickness.

9. The active radiation control window of claim 1, further comprising:
a protective layer formed on the control layer with a light transmissive material.

10. The active radiation control window of claim 9, wherein the protective layer comprises a transparent electrode, and the transparent electrode increases the total transmissivity of the visible light due to an anti-reflection effect.

11. The active radiation control window of claim 9, further comprising:
an insulating layer disposed between the protective layer and the control layer, and configured to electrically insulate the protective layer from the control layer.

12. The active radiation control window of claim **1,** further comprising:
an electrode layer disposed over the resonance layer and disposed at a side of the control layer, and configured to provide a power to apply an electric field to the resonance layer.

13. The active radiation control window of claim **1,** further comprising:
an adhesive layer disposed on the control layer and having an adhesion.

14. The active radiation control window of claim **1,** further comprising:
an adhesive layer disposed under a substrate on which the filter layer is formed, and having an adhesion.

## Patentansprüche

1. Scheibe (1) zur aktiven Strahlungssteuerung, umfassend:
eine Steuerschicht (100), die so konfiguriert ist, dass sie die Lichtdurchlässigkeit oder Absorptionsfähigkeit von Licht in einem nahen Infrarotbereich entsprechend einer angelegten Spannung steuert;
eine Filterschicht (200), die unter der Steuerschicht angeordnet und so konfiguriert ist, dass sie sichtbares Licht weiterleitet und Licht im nahen Infrarotbereich reflektiert; und
eine Resonanzschicht (300), die zwischen der Steuerschicht und der Filterschicht angeordnet ist und ein dielektrisches Material aufweist;
wobei die gesamte Lichtdurchlässigkeit des sichtbaren Lichts beibehalten wird und das gesamte Reflexionsvermögen des Lichts im nahen Infrarotbereich gesteuert wird, wenn sich die angelegte Spannung ändert;
wobei die Resonanzschicht Folgendes verstärkt:
eine Differenz zwischen dem gesamten Reflexionsvermögen des Lichts im nahen Infrarotbereich bei Anlegen einer ersten Spannung und des gesamten Reflexionsvermögens des Lichts im nahen Infrarotbereich bei Anlegen einer zweiten Spannung; und
eine Differenz zwischen dem Gesamtreflexionsvermögen des Lichts im nahen Infrarotbereich bei Anlegen einer zweiten Spannung und der gesamten Absorptionsfähigkeit des Lichts im nahen Infrarotbereich bei Anlegen der ersten Spannung.

2. Scheibe zur aktiven Strahlungssteuerung nach Anspruch 1, wobei die Steuerschicht steuert:
die Lichtdurchlässigkeit des Lichts im nahen Infrarotbereich bei Anlegen einer ersten Spannung, die höher ist als die bei Anlegen einer zweiten Spannung, die sich von der ersten Spannung unterscheidet;
die Absorptionsfähigkeit des Lichts im nahen Infrarotbereich bei Anlegen einer ersten Spannung, die geringer ist als die bei Anlegen einer zweiten Spannung; oder
die Lichtdurchlässigkeit und die Absorptionsfähigkeit des sichtbaren Lichts, um sie gleichmäßig aufrechtzuerhalten, wenn die erste und zweite Spannung angelegt werden.

3. Scheibe zur aktiven Strahlungssteuerung nach Anspruch 2, wobei die Steuerschicht eine Vielzahl von übereinander angeordneten Graphenschichten umfasst.

4. Scheibe zur aktiven Strahlungssteuerung nach Anspruch 1, wobei die Filterschicht eine abwechselnde Anordnung einer dielektrischen Schicht und einer Metallschicht umfasst und die dielektrische Schicht ein lichtdurchlässiges Material für das sichtbare Licht und das Licht im nahen Infrarotbereich umfasst.

5. Scheibe zur aktiven Strahlungssteuerung nach Anspruch 1, wobei die Filterschicht mindestens eine dielektrische Schicht umfasst, die übereinander angeordnet ist.

6. Scheibe zur aktiven Strahlungssteuerung nach Anspruch 5, wobei jede der dielektrischen Schichten abwechselnd ein dielektrisches Material mit einem relativ hohen Brechungsindex und ein dielektrisches Material mit einem relativ niedrigen Brechungsindex umfasst.

7. Scheibe zur aktiven Strahlungssteuerung nach Anspruch 1, wobei die Resonanzschicht die gesamte Absorptionsfähigkeit des sichtbaren Lichts bei Anlegen der ersten und der zweiten Spannung verringert.

8. Scheibe zur aktiven Strahlungssteuerung nach Anspruch 1, wobei die Resonanzschicht eine einheitliche Dicke aufweist.

9. Scheibe zur aktiven Strahlungssteuerung nach Anspruch 1, ferner umfassend:
eine auf der Steuerschicht aus einem lichtdurchlässigen Material ausgebildete Schutzschicht.

10. Scheibe zur aktiven Strahlungssteuerung nach Anspruch 9, wobei die Schutzschicht eine transparente Elektrode umfasst und die transparente Elektrode aufgrund eines Antireflexionseffekts die gesamte Lichtdurchlässigkeit des sichtbaren Lichts erhöht.

11. Scheibe zur aktiven Strahlungssteuerung nach Anspruch 9, ferner umfassend:
eine zwischen der Schutzschicht und der Steuerschicht angeordnete Isolierschicht, die so konfiguriert ist, dass sie die Schutzschicht von der Steuerschicht elektrisch isoliert.

12. Scheibe zur aktiven Strahlungssteuerung nach Anspruch 1, ferner umfassend:
eine über der Resonanzschicht und auf einer Seite der Steuerschicht angeordnete Elektrodenschicht, die so konfiguriert ist, dass sie eine Leistung zum Anlegen eines elektrischen Feldes an die Resonanzschicht bereitstellt.

13. Scheibe zur aktiven Strahlungssteuerung nach Anspruch 1, ferner umfassend:
eine auf der Steuerschicht angeordnete Klebstoffschicht mit einer Haftwirkung.

14. Scheibe zur aktiven Strahlungssteuerung nach Anspruch 1, ferner umfassend:
eine Klebstoffschicht, die unter einem Substrat angeordnet ist, auf dem die Filterschicht ausgebildet ist, und die eine Haftwirkung aufweist.

## Revendications

1. Fenêtre active de réglage du rayonnement (1) comprenant :
une couche de réglage (100) conçue pour régler la transmissivité ou l'absorptivité d'une lumière proche infrarouge en fonction d'une tension appliquée ;
une couche de filtre (200) disposée sous la couche de réglage et conçue pour transmettre une lumière visible et pour réfléchir la lumière proche infrarouge ; et
une couche de résonance (300) disposée entre la couche de réglage et la couche de filtre et présentant un matériau diélectrique,
dans laquelle la transmissivité totale de la lumière visible est maintenue et la réflectivité totale de la lumière proche infrarouge est réglée lorsque la tension appliquée est modifiée,
dans laquelle la couche de résonance amplifie :
une différence entre la réflectivité totale de la lumière proche infrarouge lorsqu'une première tension est appliquée et la réflectivité totale de la lumière proche infrarouge lorsqu'une seconde tension est appliquée ; et
une différence entre l'absorptivité totale de la lumière proche infrarouge lorsque la seconde tension est appliquée et l'absorptivité totale de la lumière proche infrarouge lorsque la première tension est appliquée.

2. Fenêtre active de réglage du rayonnement selon la revendication 1, dans laquelle la couche de réglage règle :
la transmissivité de la lumière proche infrarouge lorsqu'une première tension est appliquée doit être supérieure à celle lorsqu'une seconde tension différente de la première est appliquée ;
la capacité d'absorption de la lumière proche infrarouge lorsque la première tension est appliquée doit être inférieure à celle lorsque la seconde tension est appliquée ; ou
la transmissivité et l'absorptivité de la lumière visible doivent être maintenues uniformément lorsque les première et seconde tensions sont appliquées.

3. Fenêtre active de réglage du rayonnement selon la revendication 2, dans laquelle la couche de réglage comprend une pluralité de couches de graphène empilée les unes sur les autres.

4. Fenêtre active de réglage du rayonnement selon la revendication 1, dans laquelle la couche de filtre comprend une couche diélectrique et une couche métallique disposées en alternance et la couche diélectrique comprend un matériau laissant passer la lumière destinée à la lumière visible et à la lumière proche infrarouge.

5. Fenêtre active de réglage du rayonnement selon la revendication 1, dans laquelle la couche de filtre comprend au moins des couches diélectriques empilées les unes sur les autres.

6. Fenêtre active de réglage du rayonnement selon la revendication 5, dans laquelle chacune des couches diélectriques comprend alternativement un matériau diélectrique présentant un indice de réfraction relativement élevé et un matériau diélectrique présentant un indice de réfraction relativement faible en alternance.

7. Fenêtre active de réglage du rayonnement selon la revendication 1, dans laquelle la couche de résonance diminue l'absorptivité totale de la lumière visible lorsque les première et seconde tensions sont appliquées.

8. Fenêtre active de réglage du rayonnement selon la revendication 1, dans laquelle la couche de résonance présente une épaisseur uniforme.

9. Fenêtre active de réglage du rayonnement selon la revendication 1, comprenant en outre :
une couche de protection formée sur la couche de réglage avec un matériau laissant passer la lumière.

10. Fenêtre active de réglage du rayonnement selon la revendication 9, dans laquelle la couche de protection comprend une électrode transparente et l'électrode transparente augmente la transmissivité totale de la lumière visible en raison d'un effet antireflet.

11. Fenêtre active de réglage du rayonnement selon la revendication 9, comprenant en outre :
une couche d'isolation disposée entre la couche de protection et la couche de réglage et conçue pour isoler électriquement la couche de protection de la couche de réglage.

12. Fenêtre active de réglage du rayonnement selon la revendication 1, comprenant en outre :
une couche d'électrode disposée sur la couche de résonance et disposée sur un côté de la couche de réglage et conçue pour fournir une puissance pour appliquer un champ électrique à la couche de résonance.

13. Fenêtre active de réglage du rayonnement selon la revendication 1, comprenant en outre :
une couche d'adhérence disposée sur la couche de réglage et présentant une adhérence.

14. Fenêtre active de réglage du rayonnement selon la revendication 1, comprenant en outre :
une couche d'adhérence disposée sous un substrat sur lequel la couche de filtre est constituée et présentant une adhérence.
